# EUROPEAN PATENT SPECIFICATION

(11) **EP 4 263 949 B1**
(45) Date of publication and mention of the grant of the patent: **21.01.2026**
(21) Application number: 21830787.4
(22) Date of filing: 16.12.2021
(51) Int. Cl.: E01H 4/02

(54) **SNOWGROOMER AND METHOD FOR CONTROLLING A SNOWGROOMER**
PISTENRAUPE UND VERFAHREN ZUM STEUERN EINER PISTENRAUPE
DAMEUSE ET PROCÉDÉ DE COMMANDE D'UNE DAMEUSE

(30) Priority: 16.12.2020 IT 202000031076
(43) Date of publication of application: 25.10.2023
(73) Proprietor: PRINOTH S.p.A., 39049 Vipiteno (BZ) (IT)
(72) Inventor: KIRCHMAIR, Martin, 39049 Vipiteno (BZ) (IT); SALIS, Francesco, 39049 Vipiteno (BZ) (IT); PAOLETTI, Alberto, 39049 Vipiteno (BZ) (IT)
(74) Representative: Studio Torta S.p.A.
(86) International application number: PCT/IB2021/061858
(87) International publication number: WO 2022/130279

(56) References cited:
- EP-A1- 1 182 409
- EP-A2- 0 160 195
- WO-A1-2020/065607

## Description

### CROSS-REFERENCE TO RELATED APPLICATIONS

This patent application claims priority from Italian patent application no. 102020000031076 filed on December 16, 2020.

### TECHNICAL FIELD

This invention concerns a snow groomer vehicle and a method for controlling a snow groomer vehicle. In addition, this invention concerns a management system for a snow groomer vehicle, a ski resort comprising this management system, and a method for managing a ski resort.

### BACKGROUND ART

EP 1182409 A1 discloses a computer-controlled equipment for maintaining and covering skiing slopes with snow.

WO 2020/065607 A1 discloses a ski resort management system comprising a data acquisition system that receives data from the snow groomers of the ski resort.

EP 0160195 A2 discloses a device for controlling the movements of a levelling blade of a ski track grooming vehicle.

As is known, a snow groomer vehicle is used by professional operators who are instructed in the use of a snow groomer vehicle. Usually, the snow groomer vehicles are used at night because the ski slopes are free and not occupied by users. In addition, the snow groomer vehicles operate on snowy slopes where obstacles and sources of danger cannot be immediately recognised due to the presence of snow throughout the surrounding environment. In addition, a snow groomer vehicle may be used by expert operators and less expert ones who do not know the environment in which they are operating, and the associated risks, perfectly.

For this reason, the use of a snow groomer vehicle may entail risks for the operator, for people around the snow groomer vehicle, and for the surrounding environment due to various factors, for example due to there being excessive snow on the slope that makes it more difficult to recognise surrounding obstacles and sources of danger either due to scarce visibility owing to particular weather conditions, or due to the operator's scarce knowledge of a particular place where they are operating, for example, a particular slope on which they are operating, or due to the inexperience of an operator, perhaps an operator who does not have a great deal of experience in the use of snow groomer vehicles in general or of the particular snow groomer vehicle that they are operating.

### DISCLOSURE OF INVENTION

The purpose of this invention is to provide a snow groomer vehicle that reduces the drawbacks of the prior art.

According to this invention, therefore, a snow groom vehicle comprising the following is provided: a frame; two tracks; a drive unit connected to the two tracks to move the snow groomer vehicle; at least one working device selected from a group of working devices including: a winch, a tiller assembly, and a shovel, in particular the working device being connected to the frame by means of a connecting device; at least one control device configured to control at least one parameter of the snow groomer vehicle, preferably related to the tracks or the at least one working device, in particular the at least one parameter being selected from a group comprising the following parameters: speed of the snow groomer vehicle; number of revolutions of the drive unit; switching on of a light assembly of the snow groomer vehicle; settings of the tiller; settings of the winch; settings of the blade; positions of the blade with respect to the three Cartesian axes; settings of the snow groomer vehicle; setting of the suspension of the snow groomer vehicle; a message to be sent to a display screen of the snow groomer vehicle; setting of the speed limit; setting of alarms; warnings concerning driving direction, in particular warnings concerning critical area entry; warning of risk of collision with static or dynamic objects; distance indicator to other snow groomer vehicles preferably during operations of fleet snow groomer vehicles; direction of rotation of a shaft of the tiller assembly; depth and/or angle of cut of the tiller assembly preferably of the tiller; position of the tiller assembly along a vertical axis; mode of adjusting the position of the tiller assembly along a vertical axis, preferably from among: a mode in which the tiller assembly is in a fixed position, a mode in which the tiller assembly exerts a given pressure on the snowpack in addition to its own weight or subtracted from its own weight and said exerted pressure value, and a mode in which the tiller assembly is in a floating position, in particular, in the floating position, it follows the snowpack; position of the wings, open or closed; volume of a working chamber of the tiller; position of the tiller with respect to a horizontal plane; mode of adjusting the position of the tiller with respect to a horizontal plane preferably between a mode in which the tiller assembly is in a fixed position, and a mode in which the tiller assembly is in a floating position, in particular, in the floating position, it follows the movements of the snow groomer vehicle; and position of the finisher; the snow groomer vehicle comprising a radio communication unit coupled to the control device and configured to receive data from the outside and preferably send data to the outside, and configured to provide the data received from the outside to the control device; the snow groomer vehicle comprising a user interface comprising at least one control for receiving control instructions from an operator relating to the at least one parameter of the snow groomer vehicle and coupled to the control device so as to send thereto the control instructions received from the operator; the snow groomer vehicle comprising a position detector, in particular of the GNSS type, configured to detect the position preferably within a ski resort and coupled to the control device so as to send the detected position to the control device; the control device being configured to control in a first operating mode the at least one parameter based on the operator's control instructions received via the user interface, on the data received via the radio communication unit, and on the position detected via the position detector.

Thanks to this invention, the use of said snow groomer vehicle is safer for an operator because it is possible to set parameters for the snow groomer vehicle, for example remotely, so as, for example, to limit the speed in some areas that are particularly dangerous, or to switch on the lights or to implement various functions to improve the safety of the snow groomer vehicle when it enters some areas that are defined beforehand as dangerous.

Another purpose of this invention is to provide a method of controlling a snow groomer vehicle that reduces the drawbacks of the prior art.

According to an additional aspect of the invention, a control method according to one of the claims from 14 to 23 is also provided.

### BRIEF DESCRIPTION OF THE DRAWINGS

Additional characteristics and advantages of this invention will be clear from the description that follows of non-limiting embodiments, with reference to the attached figures, in which:
- Figure 1 is a side view of a snow groomer vehicle in accordance with an embodiment of this invention;
- Figure 2 is a simplified block diagram of the snow groomer vehicle in Figure 1;
- Figure 3 is a block diagram of a management system of the snow groomer vehicle in Figure 1;
- Figure 4 is a map of a ski resort that illustrates snow groomer vehicles and areas of the map M.

### BEST MODE FOR CARRYING OUT THE INVENTION

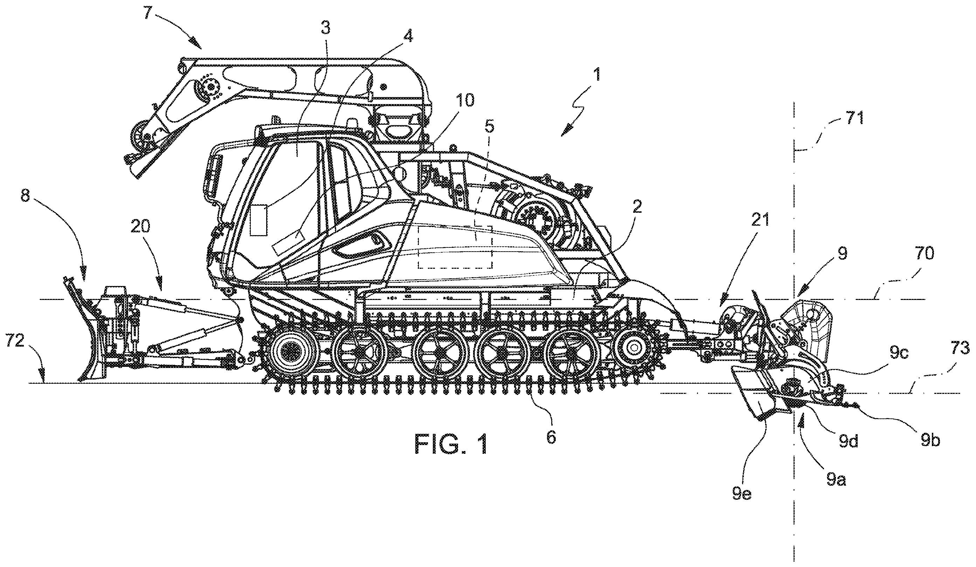

With reference to Figures 1 to 2, the reference number 1 denotes a snow groomer vehicle, according to one embodiment of this invention, as a whole, and comprises a frame 2, which extends along a longitudinal axis 70, a driving cabin 3, and a drive unit 5, for example an internal combustion engine. The driving cabin 3 and the drive unit 5 are housed on the frame 2. The snow groomer vehicle 1 is, in addition, provided with a pair of tracks 6 and with at least one user device. The at least one user device is defined by one or more of the following devices: a shovel or blade 8, supported at the front by the frame 2; a winch 7; and a tiller assembly 9 comprising a tiller 9a and preferably a finisher 9b, supported at the back by the frame 2. In more detail, the invention refers to a snow groomer vehicle 1 that has, as a user device, for example, only the tiller assembly 9 or only the shovel 8 or only the tiller assembly 9 and the shovel 8 or other possible combinations of user devices.

The drive unit 5 provides the necessary power to operate the snow groomer vehicle 1 and, in particular, to the tracks 6 and at least to the user device 7, 8, and/or 9.

The transmission of power 12 may be hydraulic or electric or a combination of hydraulic and electric.

The drive unit 5 may be an electric motor with a rechargeable battery or an internal combustion engine. Alternatively, the drive unit 5 may be a hybrid motor comprising an internal combustion engine and an electric motor connected in series or in parallel. In another embodiment, the drive unit 5 may be a fuel cell engine fed with hydrogen.

The tiller 9a in particular comprises a rotating shaft 9d provided with teeth and a protection casing 9c that is arranged above the rotating shaft 9d. The area between the protection casing 9c and the rotating shaft 9d is called the working chamber and is configured to have a variable volume. In particular, the tiller 9a comprises a device for varying the distance between the rotating shaft 9d and the protection casing 9c or for varying the position of the finisher 9b. Thus, the volume of the working chamber may be adjusted. This device may act on the rotating shaft 9d, adjusting its position or it may act on the protection casing 9c, by adjusting its position, or it may act on the finisher 9b, by varying its position. By varying the working chamber, you obtain a different tilling of the processed snowpack.

The tiller assembly 9 comprises two side wings 9e arranged laterally to the protection casing 9c.

In one embodiment not illustrated in the attached figures, the tiller assembly 9 comprises two tillers 9a that are connected to each other via a (preferably universal) joint. In this embodiment, each of the two tillers 9a comprises a rotating shaft 9d provided with teeth and a protection casing 9c that is arranged above the rotating shaft 9d.

The snow groomer vehicle 1 comprises a user interface that is installed in the driving cabin 3 and enables an operator to control one or more parameters of the snow groomer vehicle including, preferably: the speed of the snow groomer vehicle 1, the operation of the user devices, the operation of the lights, and the parameters of the drive unit 5.

In particular, the user interface comprises drive controls 10 for the snow groomer vehicle 1 to control one or more snow groomer vehicle 1 parameters. In more detail, through the drive controls 10, an operator sends control instructions to the snow groomer vehicle 1 to control one or more parameters of the snow groomer vehicle 1.

The drive controls 10 may comprise one or more of the following elements: a steering wheel, levers, one or more pedals, multiple buttons, a touch screen, a joystick comprising a lever, preferably said joystick comprises at least one slider and at least one mini-lever, especially housed on said lever.

Throughout the text, the phrase "one or more parameters of the snow groomer vehicle" means one or more of the following parameters: snow groomer vehicle speed 1; number of revolutions of the drive unit 5; switching on a light assembly of the snow groomer vehicle 1; settings of the tiller assembly 9; settings of the winch 7; settings of the blade 8; positions of the blade 8 with respect to the three Cartesian axes; settings of the snow groomer vehicle 1; setting of the suspension of the snow groomer vehicle 1; a message to be sent to a display screen of the snow groomer vehicle 1; speed limit setting; setting of alarms; warnings concerning driving direction, in particular warnings concerning critical area entry; warning of risk of collision with static or dynamic objects; distance indicator to other snow groomer vehicles 1 preferably during operations of fleet snow groomer vehicles; direction of rotation of the shaft 9d; depth and/or angle of cut of the tiller assembly 9, preferably of the tiller 9a; position of the tiller assembly 9a along a vertical axis 71; mode of adjusting the position of the tiller assembly 9 along a vertical axis 71, preferably from among: a mode in which the tiller assembly 9 is in a fixed position, a mode in which the tiller assembly 9 exerts a given pressure on the snowpack 72 in addition to its own weight or subtracted from its own weight and said exerted pressure value, and a mode in which the tiller assembly 9 is in a floating position, in particular, when in the floating position, the position of the tiller assembly 9 follows the snowpack 72; position of the wings 9e, whether open or closed; volume of a working chamber of the tiller 9a; position of the tiller 9a with respect to a horizontal plane 73; mode of adjusting the position of the tiller 9a with respect to a horizontal plane 73 preferably between a mode in which the tiller assembly 9 is in a fixed position, and a mode in which the tiller assembly is in a floating position, in particular, when in the floating position, the tiller assembly follows the movements of the snow groomer vehicle 1; and position of the finisher 9b.

In addition, in the embodiment described above wherein the tiller assembly 9 comprises two tillers 9a connected to each other via a (preferably universal) joint, the phrase "parameters of the snow groomer vehicle" may also comprise one of more of the following parameters: mode for adjusting the relative position between the two tillers 9a of the tiller assembly 9, in particular between one mode in which the relative position between the two tillers 9a is free and, as a result, the two tillers 9a are free to move independently of each other, one mode in which the position of the two tillers 9a is fixed so that the two tillers 9a form a given angle between them equal to 180° and lying on a plane that is oblique to the snowpack 72 (in particular, the angle faces the snowpack 72), a mode in which the position of the two tillers 9a is fixed so that the two tillers 9a form a given angle of less than 180° between them and lying on a plane oblique to the snowpack 72 (in particular, the angle faces the snowpack), and a mode in which the position of the two tillers 9a is fixed so that the two tillers 9a form a given angle greater than 180° between them and lying on a plane oblique to the snowpack 72 (in particular, the angle faces the snowpack 72). As a result, in this embodiment, the drive control 10 may also control one or more parameters of the snow groomer vehicle cited in this paragraph.

In more detail, the warnings concerning driving direction, in particular warnings concerning critical area entry, may be related, for example, to warnings regarding entry into a black slope, especially via a flashing indicator on the user interface indicating the direction of warning.

In more detail, the indicator of distance from other snow groomer vehicles, preferably during operations of fleet snow groomer vehicles, in particular indicates whether the distance between the other snow groomer vehicles of the fleet is continuously maintained.

In addition, the warning of risk of collision with static or dynamic objects, in particular, is a warning that indicates whether one is about to collide with static objects that were previously located on the map M or with dynamic objects, in particular moving ones, which send their position to a processing unit as will be seen below.

In one preferred embodiment, one of the parameters of the snow groomer vehicle controlled via the drive controls 10 is the speed of the snow groomer vehicle 1, in particular the movement of the tracks 6 in order to define the movement speed of the snow groomer vehicle 1.

In one preferred embodiment, one of the parameters of the snow groomer vehicle controlled via the drive controls 10 is the direction of the snow groomer vehicle 1, in particular the movement of the tracks 6 in order to define the movement direction of the snow groomer vehicle 1.

In another preferred embodiment, some of the snow groomer vehicle 1 parameters controlled via the drive controls 10 relate to the user devices.

In another preferred embodiment, some of the snow groomer vehicle 1 parameters controlled via the drive controls 10 are the lights of the snow groomer vehicle.

With reference to Figure 1, the blade 8 is connected to the frame 2, via a front connecting device 20, while the tiller assembly 9 is connected to the frame 2 via a back connecting device 21.

The drive control 10 is configured to control the front connecting device 20 and makes it possible to control shovel parameters, in particular shovel 8 positions.

In addition, the drive control 10 is configured to control the back connecting device 21.

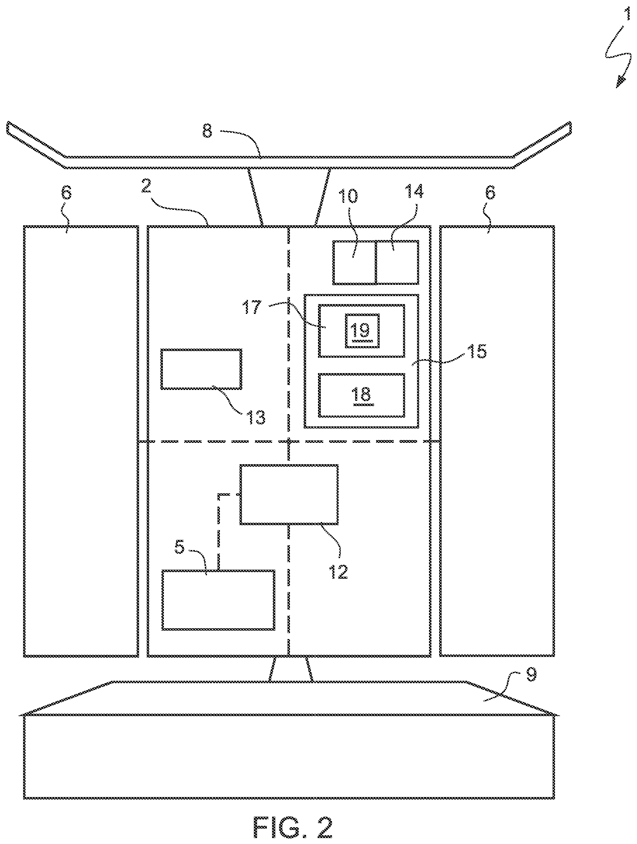

With reference to the figures, the back connecting device 21 also comprises an actuator assembly 50 (Figure 2) to control parameters relating to the tiller assembly 9.

The snow groomer vehicle 1 comprises a control system 15 that detects the parameters (listed above) of the snow groomer vehicle 1.

In one preferred embodiment, the control system 15 detects one or more parameters of the snow groomer vehicle 1: the power delivered by the drive unit 5; the snow groomer vehicle 1 speed; the number of engine revolutions of the drive unit 5; the state of the lights of the snow groomer vehicle 1; the settings of the suspension of the snow groomer vehicle 1; the power absorbed by each of the user devices, in particular of the winch 7 and/or of the blade 8 and/or of the tiller 9; a position of the blade 8 and a position of the tiller assembly 9.

The control system 15 comprises a control device 17.

In one non-limiting embodiment, the user interface comprises a display screen 4 that is configured to show information regarding one or more of the parameters of the snow groomer vehicle 1 described above.

In one preferred embodiment, the display screen 4 is a touch screen; as a result, the operator may use the screen as drive control 10 for one or more of the parameters of the snow groomer vehicle 1.

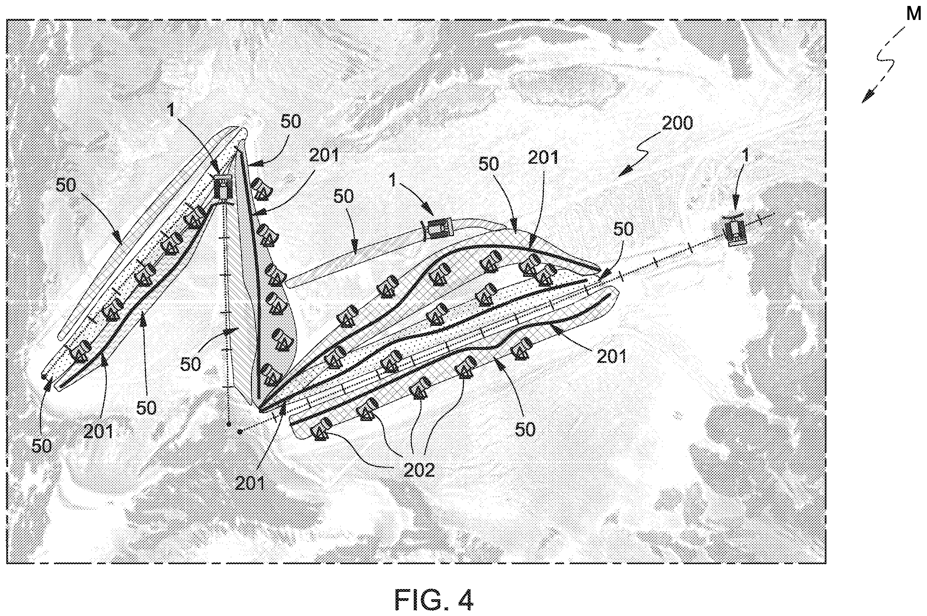

The snow groomer vehicle 1 comprises a position detector 13, for example a satellite navigation device of the GNSS ("Global Navigation Satellite System") type, for example of the GPS or Galileo or Glonass type (or a combination of these), configured to detect the position preferably within a ski resort 200 (Figure 4) and coupled to the control system 15, in particular to the control device 17, to send thereto the position detected within the ski resort 200.

In more detail, the position detector 13 is configured to determine, preferably with precision in the order of centimetres, its three-dimensional position and orientation and, as a result, the three-dimensional position and orientation of the snow groomer vehicle 1. In practice, the position detector 13 makes it possible to determine longitude LG, latitude LT, and, preferably, height above ground H, in addition to forward direction.

The control system 15 is equipped with wireless connection capacity, for example directly through a local communication network or through a mobile data network, and an internet connection, for connecting to a management system of a ski resort.

In particular, the control system 15 comprises a radiowave communication unit 18 coupled to the control device 17, configured to receive data remotely and provide them to the control device 17 and, preferably, to send data from the control device 17 outside. In one preferred embodiment, the remote data sent to the snow groomer vehicle 1 via the communication unit 18 comprise data relating to a map M, to an area 50 of the map M, to at least one of the parameters of the snow groomer vehicle 1, associated with said area 50, and to a value or to a range of values of said parameter.

The user interface is coupled to the control system 15, in particular to the control device 17, to send thereto the operator's control instructions received via the user interface controls 10.

The control device 17 is configured to control at least one of the parameters illustrated above of the snow groomer vehicle 9. In other words, the control device 17 is configured to control the behaviour of the snow groomer vehicle 1.

In particular, the control device 17, as mentioned above, receives the control instructions of the operator received via the user interface controls 10, remote data via the radio communication unit 18, and the position via the position detector 13.

The control device 17 is configured to control in a first operating mode the at least one of the parameters of the snow groomer vehicle 1 (described above) based on the control instructions received via the user interface controls 10, on the data received via the radio communication unit 18, and on the position detected via the position detector 13.

In one preferred embodiment, the control device 17 comprises a memory 19 configured to store the data received from the radio communication unit 18, in particular the data comprise a map M and/or the data relating to a map M, to an area 50 of the map M, to at least one of the parameters of the snow groomer vehicle 1, associated with said area 50, and to a value or to a range of values of said parameter. In other words, the control system 15 receives, from the outside (via the communication unit 18), a map M and/or data relating to a map M, preferably of the ski resort on which they are operating, an area of the map M and/or data relating to an area 50 of the map M, preferably at least one of the parameters of the snow groomer vehicle 1 associated with said area 50, and, in particular, a value or a range of values of said parameter, and stores them in the memory 19.

In use, the control device 17 is configured to control, in the first operating mode, at least one of the parameters of the snow groomer vehicle 1 described above based on the control instructions received via the user interface controls 10; on the data stored in the memory 19 and relating to the map M, to the area of the map M, and to the parameter associated with the area of the map M and a value or a range of values associated with said parameter; and on the position detected via the position detector 13.

In more detail, the control device 17 is configured to determine whether the snow groomer vehicle 1 is within at least one area 50 of the map M based on the position received by the position detector 13 and to control the at least one of the parameters indicated by the data in the memory 19 based on the presence, or lack thereof, of the snow groomer vehicle 1 in the at least one area 50 of the map M and, preferably, based on the controls 10 of the operator received via the user interface.

In more detail, the control device 17, if it detects that the position of the snow groomer vehicle 1 is within the area 50 of the map M, controls the at least one of the parameters of the data in the memory 19 based on the control instructions received via the user interface controls 10, according to the first operating mode and based on the values of range of values relating to said parameter and stored in the memory 19. For example, in the first operating mode it is possible to limit the maximum value of the at least one of the parameters or to set ranges of values within which the at least one of the parameters must be or to set one specific value of at least one of the parameters by setting these data remotely and sending these data to the snow groomer vehicle 1 via the communication unit 18, in this way these data will be stored in the memory 19 and the control device 17 will control the parameters indicated by the data sent remotely according to the values or the range of values indicated by the data sent remotely if the snow groomer vehicle 1 is located in the area 50 of the map M indicated by the data sent remotely.

In addition, the control device 17, if it detects that the position of the snow groomer vehicle 1 is outside the area 50 of the map M, it controls the at least one of the parameters indicated by the data, preferably directly, based on the operator's control instructions received via the user interface controls 10, according to a second operating mode. In the second operating mode, the at least one of the parameters preferably indicated by the data sent via the radio communication unit 18, corresponds to the values set by the operator using the user interface controls 10 without, for example, limitations regarding maximum value or a range or pre-set values, as in the first operating mode.

In one preferred embodiment, the user interface comprises at least one operating command 14 that can be driven by the operator and in which the control device 17 is configured to control, in the second operating mode, the at least one of the parameters based on the control instructions received via the user interface controls 10, when it receives the operating command from the operator. In particular, in this case, being in the second operating mode, the control device controls the at least one of the parameters, in particular without taking into account the values or range of values of the at least one of the parameters of the data received via the communication unit 19, and of the position detected via the position detector 13. In other words, the control device 17 is configured to control the at least one of the parameters in the second operating mode, i.e., directly based on the operator's command, when the at least one operating command 14 is activated by the operator.

The operating command 14 may be defined by a button in the user interface or may be defined by a specific value of the control 10, for example when the control 10 is a pedal, the operating command 14 may be defined by the control 10 being fully activated, i.e., by the pedal being fully pressed, or if the control 10 is a lever, the operating command 14 may be defined by the control 10 being fully activated, for example the lever is fully pressed.

In another embodiment, the command 14 may be defined by a specific range of values of the control 10. For example, when the control 10 is a pedal, the operating command 14 may be defined by the control 10 being activated within a specific range, for example, activated by a value greater or equal to 70% or 80% or 90% or 95% or 99% or 100%, or if the control 10 is a lever, the operating command 14 may be defined by the control 10 being activated within a specific range, for example activated by a value greater or equal to 70% or 80% or 90% or 95% or 99% or 100%.

In a preferred embodiment of this invention, the at least one of the parameters is the speed of the snow groomer vehicle 1 and/or the number of engine revolutions of the snow groomer vehicle 1; as a result, the control device 17 is configured to adjust the speed of the snow groomer vehicle 1 and/or the number of engine revolutions of the snow groomer vehicle 1 based on the position detected via the position detector 13, in particular limiting it to a maximum value. The control device 17 is preferably configured to adjust, in particular limiting to a maximum value, the speed of the snow groomer vehicle 1 and/or the number of engine revolutions of the snow groomer vehicle 1 if the snow groomer vehicle 1 is within the at least one area 50 of the map M.

In this embodiment, the control 10 is preferably defined by a pedal or by a lever and the command 14 is defined by the value of the pedal or of the lever activated by a value greater or equal to 70% or 80% or 90% or 95% or 99% or 100%.

In a preferred embodiment of this invention, the at least one of the parameters is switching on a light assembly of the snow groomer vehicle 1; as a result, the control device 17 is configured to switch on a light assembly of the snow groomer vehicle 1 based on the position detected by the position detector 17. In particular, it is configured to switch on a light assembly of the snow groomer vehicle 1 if the snow groomer vehicle 1 is within the at least one area 50 of the map M.

In one preferred embodiment of this invention, the parameter is a message to be sent to the display screen 4 of the snow groomer vehicle 1. In particular, in this embodiment, the control device 17 is configured to send a message to the display screen 4 based on the position detected by the position detector 13, in particular it is configured to send a message to the display screen 4 if the snow groomer vehicle is within the at least one area 50 of the map M.

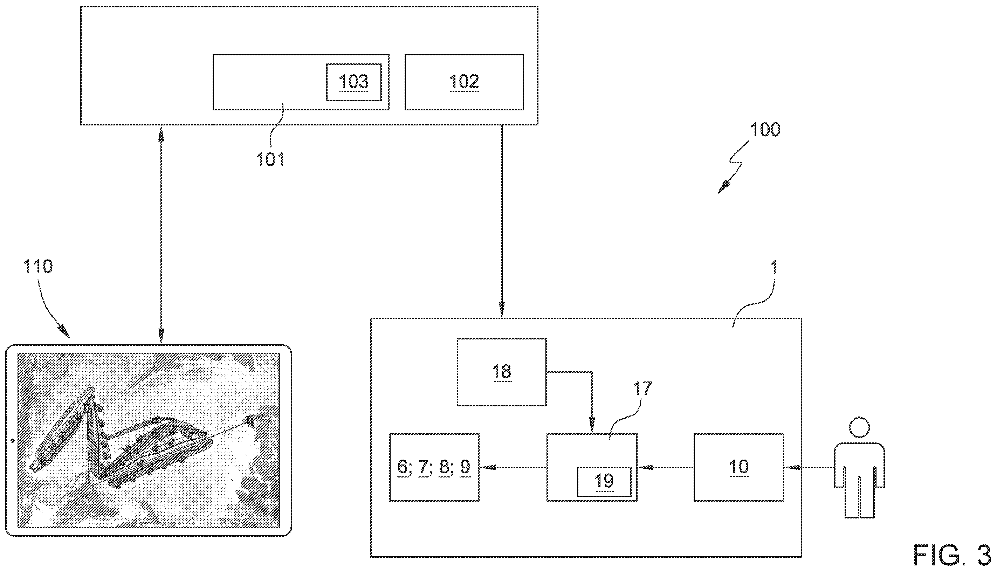

In one embodiment of this invention illustrated in Figure 3, the snow groomer vehicle just described is part of a management system 100 of a snow groomer vehicle. The management system 100 of the snow groomer vehicle comprises one or more snow groomer vehicles 1 of the type illustrated above, a processing unit 101, and a communication unit 102 coupled in communication with the snow groomer vehicle 1, in particular with the radio communication unit 18 of the snow groomer vehicle 1.

In addition, the processing unit 101 comprises a memory 103 on which the following are stored: the map M and/or the data relating to it, the at least one area 50 of the map M and/or the data relating to it, the at least one of the parameters associated with the at least one area 50 of the map M, and the at least one value or range of values associated with the at least one of the parameters.

The processing unit 101 is configured to send one area 50 of the map M and/or the data relating to it, the at least one of the parameters associated with the at least one area 50 of the map M, and the at least one value or range of values associated with the at least one of the parameters to the snow groomer vehicle via the communication unit 102 and the radio communication unit 18. In one embodiment, the processing unit 101 is configured to also send the map M and/or the data relating to it.

In one preferred embodiment, the processing unit 101 is defined by a server arranged in any part of the world or, in particular, in a ski resort.

In another embodiment of this invention, the management system 100 comprises multiple snow groomer vehicles 1 of the type described above. In this embodiment, the processing unit 101 is configured to send the at least one area 50 of the map M and/or the data relating to it, the at least one of the parameters associated with the at least one area 50 of the map M, and the at least one value or range of values associated with the at least one of the parameters, and, preferably, the map M and/or the data relating to it, to some or all of the snow groomer vehicles 1 of the multiple snow groomer vehicles 1 via the communication unit 102 and the corresponding radio communication unit 18. In one embodiment, multiple areas 50 of the map M are defined and some areas 50 of the multiple areas 50 of the map M are sent to some snow groomer vehicles 1 of the multiple snow groomer vehicles 1, and other areas 50 of the multiple areas of the map M are sent to other snow groomer vehicles 1 of the multiple snow groomer vehicles 1.

In this embodiment, each snow groomer vehicle 1 preferably sends its own position to the processing unit 101.

In one preferred, but non-limiting, embodiment of this invention, one of more areas 50 of the map M have a position that varies over time. In particular, the one or more areas 50 of the map M are defined based on the position of one or more snow groomer vehicles 1. In particular, one or more areas 50 of the map M each vary respectively as the position of an associated snow groomer vehicle 1 varies; preferably, they are defined as a circumference with a centre corresponding to the respective position of the snow groomer vehicle 1 to which they are associated and having a given radius. In this embodiment, each area 50 associated with the position of a respective snow groomer vehicle 1 is not sent nor applied to said respective snow groomer vehicle 1 but is sent to some or all the snow groomer vehicles 1 of the snow groomer vehicle 1 fleet. In this way, when two snow groomer vehicles approach each other, both the snow groomer vehicles enter the area of the other and the at least one parameter of the snow groomer vehicle 1 is controlled by the respective control device 17 of each snow groomer vehicle 1 that has entered the area of the other with the same modes as the area 50 of the map M with a fixed position as indicated above.

In a preferred embodiment, with reference to Figure 3, the management system 100 of a snow groomer vehicle comprises a user interface 110 coupled in communication with the processing unit 101, the user interface 110 is configured to receive from a user the at least one area 50 of the map M, and preferably the at least one of the parameters associated with the at least one area 50 of the map M, and preferably the at least one value or range of values associated with the at least one of the parameters to the snow groomer vehicle 1, and to send it to the processing unit 101.

In particular, the user interface 110 may be a computer, or a mobile device, for example a tablet, or a mobile phone or any other electronic device with a display unit in which the map M is displayed and an input unit through which the user may define, preferably by drawing, at least one area 50 of the map M, and preferably select the at least one of the parameters associated with the at least one area 50 of the map M, and preferably select the at least one value or range of values associated with the at least one of the parameters. These data are then sent by the user interface 110 to the processing unit 101 that, in its turn, sends them to the snow groomer vehicle 1.

With reference to Figure 4, a ski resort 200 comprising the management system 100 comprising multiple snow groomer vehicles 1, as described above, and at least one ski slope 201 is illustrated, in which the map M represents the at least one ski slope.

In a preferred embodiment, the ski resort 200 comprises at least one snow production device 202 displaced along the at least one ski slope, and wherein a defined area 50 of the map M at least encompasses the position of the at least one snow production device 202.

In a preferred embodiment, the ski resort 200 is configured to control the operation of the snow production device 202 based on the proximity, or lack thereof, of areas 50 defined by the position of a snow groomer vehicle 1, for example an area defined as a circumference with its centre in the snow groomer vehicle and with a given radius, which moves together with the snow groomer vehicle 1. In other words, if a snow groomer vehicle 1 approaches a snow production device 202 and, as a result, if the snow production device 202 is temporarily located in the area 50 defined by a snow groomer vehicle 1, the ski resort 200 adjusts the operation of the snow production devices 202; in other words, the ski resort is configured to set the operation parameters of the snow production device 202 based on the presence, or lack thereof, of the snow production device 202 within an area 50 of the map M defined based on the position of a snow groomer vehicle 1, for example by switching off the snow production device 202, or adjusting its range and/or pressure and/or other operation parameters.

In one preferred embodiment, an area of the map M may be defined by the area inside of which a garage or depot or shelter or station or ski lift pylon is located; in this case, the user may program specific parameters in these areas 50 to improve the safety of the operator and to avoid damage or injury to physical elements, to the snow groomer vehicle, and to its operator. For example, it may switch on the lights of the snow groomer vehicle 1 or limit the maximum speed or set given parameters for the suspension of the snow groomer vehicle 1.

## Claims

1. Snow groomer vehicle including:
a frame (2);
two tracks (6);
a drive unit (5) connected to the two tracks (6) to move the snow groomer vehicle (1);
at least one working device (7, 8, 9) selected from the group of working devices including: a winch (7), a tiller assembly (9) and a shovel (10), in particular the working device (7, 8, 9) being connected to the frame (2) by means of a connecting device (20, 21);
at least one control device (17) configured to control at least one parameter of the snow groomer vehicle (1), preferably related to the tracks (6) or the at least one working device (7, 8, 9), in particular the at least one parameter being selected from a group comprising the following parameters: speed of the snow groomer vehicle (1); number of revolutions of the drive unit (5); switching on of a light assembly of the snow groomer vehicle (1); settings of the tiller assembly (9); settings of the winch (7); settings of the blade (8); positions of the blade (8) with respect to the three Cartesian axes; settings of the snow groomer vehicle (1); setting of the suspension of the snow groomer vehicle (1); a message to be sent on a display screen of the snow groomer vehicle (1); setting of the speed limit; setting of alarms; warnings concerning driving direction, in particular warnings concerning critical area entry; warning of risk of collision with static or dynamic objects; distance indicator to other snow groomer vehicles preferably during operations of fleet snow groomer vehicles; direction of rotation of a shaft (9d) of the tiller assembly (9); depth and/or angle of cut of the tiller assembly (9) preferably of the tiller (9a); position of the tiller assembly (9) along a vertical axis (71); mode of adjusting the position of the tiller assembly (9) along a vertical axis (71), preferably among: a mode in which the tiller assembly (9) is in a fixed position, a mode in which the tiller assembly (9) exerts a given pressure on the snowpack (72) in addition to its own weight or in subtraction with respect to its own weight and said exerted pressure value, and a mode in which the tiller assembly (9) is in a floating position, in particular the position of the tiller assembly follows the snowpack (72), when in floating position; position of the wings (9e) open or closed; volume of a working chamber of the tiller (9a); position of the tiller (9a) with respect to a horizontal plane (73); mode of adjusting the position of the tiller (9a) with respect to a horizontal plane (73) preferably between a mode in which the tiller assembly (9) is in a fixed position, and a mode in which the tiller assembly (9) is in a floating position, in particular the position of the tiller assembly (9) follows the movements of the snow groomer vehicle (1), when in floating position; and position of the finisher (9b);
the snow groomer vehicle (1) comprising a radio communication unit (18) configured to receive data from the outside and preferably send data to the outside
the snow groomer vehicle (1) comprising a user interface comprising at least one drive control for receiving control instructions from an operator relating to the at least a parameter of the snow groomer vehicle (1) and coupled to the control device (17) so as to send thereto the control instructions received from the operator;
the snow groomer vehicle (1) comprising a position detector (13), in particular of the GNSS type, configured to detect the position preferably within a ski resort (200)
**characterised in that** the radio communication unit (18) is coupled to the control device (17) and configured to provide the data received from the outside to the control device;
the position detector (13) is coupled to the control device (17) so as to send the detected position to the control device;
the control device (17) being configured to control in a first operating mode the at least one parameter based on the operator's control instructions received via the user interface, on the data received via the radio communication unit (18), and on the position detected via the position detector (13).

2. Snow groomer vehicle of claim 1, wherein the control device (17) comprises a memory (19) configured to store: preferably a map (M) and/or data relating to a map (M); an area of the map (M) and/or data relating to at least one area (50) of the map (M); preferably at least one parameter of the snow groomer vehicle (1) parameters associated with said at least one area (50); and preferably a value or range of values of said at least one parameter; the control device (17) being configured to determine whether the snow groomer vehicle (1) is within the at least one area (50) of the map (M) based on the position detected by the position detector (13) and control the at least one parameter in the first operating mode if the snow groomer vehicle is within the at least one area (50) of the map (M).

3. Snow groomer vehicle of claim 1 or 2, wherein the at least one parameter is the speed of the snow groomer vehicle (1) and/or the number of engine revolutions of the snow groomer vehicle (1); the control device (17) being configured to control the speed of the snow groomer vehicle (1) and/or the number of engine revolutions of the snow groomer vehicle (1), in particular to limit the speed of the snow groomer vehicle and/or the number of engine revolutions of the snow groomer vehicle to a maximum value, based on the position of the snow groomer vehicle (1) received via the position detector, in particular being configured to adjust, preferably to limit, the speed of the snow groomer vehicle (1) and/or the number of engine revolutions of the snow groomer vehicle (1) if the snow groomer vehicle (1) is within the at least one area (50) of the map (M).

4. Snow groomer vehicle of any of the preceding claims, wherein the at least one parameter is switching on a light assembly of the snow groomer vehicle (1); the control device (17) being configured to switch on a light assembly of the snow groomer vehicle (1) based on the position detected by the position detector (13), in particular being configured to switch on a light assembly of the snow groomer vehicle (1) if the snow groomer vehicle (1) is within the at least one area (50) of the map (M).

5. Snow groomer vehicle of any one of the preceding claims, wherein the snow groomer vehicle (1) comprises a display screen preferably housed in a cabin of the snow groomer vehicle; wherein the at least one parameter being a message to be sent to the display screen of the snow groomer vehicle (1); the control device (17) being configured to send a message to the display screen based on the position detected by the position detector (13), in particular being configured to send a message to the display screen if the snow groomer vehicle (1) is within the at least one area (50) of the map (M).

6. Snow groomer vehicle according to any of the preceding claims, wherein the user interface comprising at least one operating command (14) which can be operated by the operator; wherein the control device (17) is configured to control the at least one parameter in a second operating mode when the at least one operating command is operated by the operator; and wherein, in the second operating mode, the control device (17) is configured to control the at least one parameter based, preferably directly, on the control instructions of the control (10), and preferably disregarding the data received via the communication unit (18), and the position detected via the position detector (13).

7. Management system comprising a snow groomer vehicle (1) according to any of the preceding claims; a processing unit (101) and another communication unit (102), preferably housed in a device remote from the snow groomer vehicle, and wherein the other communication unit (102) is coupled in communication to the snow groomer vehicle (1), in particular to the communication unit (18) of the snow groomer vehicle (1); wherein the processing unit (101) comprising another memory (103) which stores the map (M) and/or map-related data, the at least one area of the map (M) and/or data related to the at least one area (50) of the map (M), preferably data circumscribing the at least one area of the map (M), preferably the at least one parameter associated with the at least one area (50) of the map (M) and preferably the at least one value or range of values associated with the at least one parameter; the processing unit (101) being configured to send: the map (M) and/or data relating to the at least one area (50) of the map (M), the at least one area (50) of the map (M) and/or data relating to the at least one area (50) of the map (M), preferably the data circumscribing the at least one area (50) of the map (M), preferably the at least one of the parameters associated with the at least one area (50) of the map (M) and preferably the at least one value or range of values associated with the at least one of the parameters, to the snow groomer vehicle (1) via the communication unit (102).

8. Management system of claim 7, comprising a plurality of snow groomer vehicles according to any of claims 1 to 6; the processing unit (101) being configured to send the at least one area of the map (M) and/or the data associated with the at least one area (50) of the map (M), preferably the data circumscribing the at least one area of the map (M), preferably the at least one parameter associated with the at least one area (50) of the map (M), and preferably the at least one value or range of values associated with the at least one parameter to one, some or all the snow groomer vehicles (1) of the plurality of snow groomer vehicles (1) via the other communication unit (102) and the respective communication unit (18) of the snow groomer vehicles (1); preferably each snow groomer vehicle (1) of the plurality of snow groomer vehicles (1) is configured to send its position to the processing unit (101).

9. Management system of claim 7 or 8, wherein the processing unit (101), in particular the further memory (103), being configured to store a plurality of areas (50) of the map (M) and/or the respective data associated with each of the plurality of areas, and preferably the respective at least one parameter associated with each area of the plurality of areas; wherein the processing unit (101) being configured to send a first group of areas (50) of the plurality of areas (50) of the map (M) and/or data associated with said first group of areas, and preferably the respective at least one associated parameter, to a first group of snow groomer vehicles (1) of the plurality of snow groomer vehicles 1, and a second group of areas (50) of the plurality of areas of the map (M) and/or data relating to said second group of areas, and preferably the respective at least one associated parameter, to a second group of snow groomer vehicles of the plurality of snow groomer vehicles.

10. Management system of claim 8 or 9, wherein one or more areas (50) of the plurality of areas of the map (M) is/are defined based on the position of one or more respective snow groomer vehicles (1) of the plurality of snow groomer vehicles (1), in particular each area (50) of the map (M) varies as the position of the respective snow groomer vehicle (1) with which it is associated varies, preferably said each area (50) of the map (M) is defined as a circumference having a centre corresponding to the position of said respective snow groomer vehicle (1) with which it is associated and having a given radius; preferably the processing unit (101) is configured to send each area (50) associated with the position of a respective snow groomer vehicle (1) to one or more of the plurality of snow groomer vehicles of the plurality except the respective snow groomer vehicle with which said area is associated.

11. Management system of any of claims 7 to 10, comprising another user interface (110) coupled in communication with the processing unit (101), the other user interface (110) being configured to receive from a user the at least one area (50) of the map (M) and/or data referring to said area, and preferably the at least one parameter associated with the at least one area (50) of the map (M), and preferably the at least one value or range of values associated with the at least one parameter of the snow groomer vehicle (1) and send it to the processing unit (101), in particular the other user interface (110) comprises a computer, or a mobile device, for example a tablet, or a mobile phone or any other electronic device with a display unit configured to display the map (M).

12. Ski resort comprising the management system (100) of any of claims 7 to 11, and the at least one ski slope (201), wherein the map (M) shows within it the at least one ski slope (201).

13. Ski resort of claim 12, comprising at least one snow production device (202) displaced along the at least one ski slope (201), and wherein the at least one area (50) of the map (M) comprises within it the position of the at least one snow production device (202).

14. Method of controlling a snow groomer vehicle; the snow groomer vehicle (1) comprising: a frame (2); two tracks (6); a drive unit (5) connected to the two tracks (6) so as to move the snow groomer vehicle (1); at least one working device (7, 8, 9) selected from the group of working devices including: a winch (7), a tiller assembly (9) and a shovel (10), in particular the working device (7, 8, 9) being connected to the frame (2) by means of a connecting device (20, 21);
the method including the steps of:
checking at least one parameter of the snow groomer vehicle (9), preferably related to the tracks (6) or the at least one working device (7, 8, 9), in particular the at least one parameter is selected from a group comprising the following parameters: snow groomer vehicle speed (1); number of revolutions of the drive unit (5); switching on of a light assembly of the snow groomer vehicle (1); settings of the tiller (9); settings of the winch (7); settings of the blade (8); positions of the blade (8) with respect to the three Cartesian axes; settings of the snow groomer vehicle (1);
settings of the suspension of the snow groomer vehicle (1);
a message to be sent to a display screen of the snow groomer vehicle (1); speed limit setting; setting of alarms; warnings concerning driving direction, in particular warnings concerning critical area entry; warning of risk of collision with static or dynamic objects; distance indicator to other snow groomer vehicles preferably during operations of fleet snow groomer vehicles; direction of rotation of a shaft (9d) of the tiller assembly (9); depth and/or angle of cut of the tiller assembly (9) preferably of the tiller (9a); position of the tiller assembly (9a) along a vertical axis (71); mode of adjusting the position of the tiller assembly (9) along a vertical axis (71), preferably among: a mode in which the tiller assembly (9) is in a fixed position, a mode in which the tiller assembly (9) exerts a given pressure on the snowpack (72) in addition to its own weight or in subtraction from its own weight and said exerted pressure value, and a mode in which the tiller assembly (9) is in a floating position, in particular the tiller assembly follows the snowpack (72), when in floating position; position of the wings (9e) open or closed; volume of a working chamber of the tiller (9a); position of the tiller (9a) with respect to a horizontal plane (73); mode of adjusting the position of the tiller (9a) with respect to a horizontal plane (73) preferably between a mode in which the tiller assembly (9) is in a fixed position, and a mode in which the tiller assembly is in a floating position, in particular the tiller assembly follows the movements of the snow groomer vehicle (1), when in floating position; and position of the finisher (9b);
receiving data from outside the snow groomer vehicle and preferably sending data to the outside via a radio communication unit (18);
receiving control instructions from an operator related to the at least one parameter of the snow groomer vehicle (1);
detecting the position of the snow groomer vehicle (1) preferably within a ski resort;
controlling in a first operating mode the at least one parameter according to the operator's control instructions, to the data received from outside, and to the detected position.

15. Method of claim 14, comprising the steps of:
storing: preferably a map (M) and/or data related to a map (M); at least one area of the map (M) and/or data related to at least one area (50) of the map (M);
preferably associating with said at least one area of the map (M) at least one parameter of the snow groomer vehicle (1) parameters, and preferably a value or range of values of said parameter;
preferably storing said at least one parameter of the snow groomer vehicle (1) associated with said at least one map area (M), and preferably a value or range of values of said parameter;
determining whether the snow groomer vehicle (1) is within the at least one area (50) of the map (M) based on the detected position; and
checking the at least one parameter according to the first operating mode if the snow groomer is within at least one area (50) of the map (M).

## Patentansprüche

1. Pistenraupenfahrzeug, beinhaltend:
einen Rahmen (2);
zwei Ketten (6);
eine Antriebseinheit (5), die mit den beiden Ketten (6) verbunden ist, um das Pistenraupenfahrzeug (1) zu bewegen;
zumindest eine Arbeitsvorrichtung (7, 8, 9), ausgewählt aus der Gruppe von Arbeitsvorrichtungen beinhaltend: eine Winde (7), eine Fräsenanordnung (9) und eine Schaufel (10), wobei insbesondere die Arbeitsvorrichtung (7, 8, 9) mittels einer Verbindungsvorrichtung (20, 21) mit dem Rahmen (2) verbunden ist;
zumindest eine Steuer- bzw. Regelvorrichtung (17), die konfiguriert ist, zumindest einen Parameter des Pistenraupenfahrzeugs (1), vorzugsweise in Bezug auf die Ketten (6) oder die zumindest eine Arbeitsvorrichtung (7, 8, 9), zu steuern bzw. zu regeln, wobei insbesondere der zumindest eine Parameter aus einer Gruppe umfassend die folgenden Parameter ausgewählt ist:
Geschwindigkeit des Pistenraupenfahrzeugs (1); Drehzahl der Antriebseinheit (5); Einschalten einer Lichtanordnung des Pistenraupenfahrzeugs (1);
Einstellungen der Fräsenanordnung (9); Einstellungen der Winde (7);
Einstellungen des Schildes (8); Positionen des Schildes (8) in Bezug auf die drei kartesischen Achsen; Einstellungen des Pistenraupenfahrzeugs (1); Einstellung der Aufhängung bzw. Federung des Pistenraupenfahrzeugs (1); eine auf einem Anzeigebildschirm des Pistenraupenfahrzeugs (1) zu sendende Nachricht;
Einstellung der Geschwindigkeitsbegrenzung; Einstellung von Alarmen;
Warnungen bezüglich Fahrtrichtung, insbesondere Warnungen bezüglich eines Einfahrens in kritische Bereiche; Warnung vor Kollisionsgefahr mit statischen oder dynamischen Objekten; Abstandsanzeige zu anderen Pistenraupenfahrzeugen, vorzugsweise während Einsätzen von Flotten-Pistenraupenfahrzeugen; Drehrichtung einer Welle (9d) der Fräsenanordnung (9); Tiefe und/oder Winkel eines Schnitts bzw. Schneidens der Fräsenanordnung (9), vorzugsweise der Fräse (9a); Position der Fräsenanordnung (9) entlang einer vertikalen Achse (71); Modus zum Einstellen der Position der Fräsanordnung (9) entlang einer vertikalen Achse (71), vorzugsweise aus: einem Modus, in dem sich die Fräsanordnung (9) in einer festen Position befindet, einem Modus, in dem die Fräsanordnung (9) einen gegebenen Druck auf die Schneedecke (72) ausübt, und zwar zusätzlich zu ihrem Eigengewicht oder abzüglich in Bezug auf Eigengewicht und dem ausgeübten Druckwert, und einem Modus, in dem sich die Fräsanordnung (9) in einer Schwebeposition befindet, wobei insbesondere die Position der Fräsanordnung der Schneedecke (72) folgt, wenn sie sich in der Schwebeposition befindet; Position der Flügel (9e) geöffnet oder geschlossen;
Volumen einer Arbeitskammer der Fräse (9a); Position der Fräse (9a) in Bezug auf eine horizontale Ebene (73); Modus zum Einstellen der Position der Fräse (9a) in Bezug auf eine horizontale Ebene (73) vorzugsweise zwischen einem Modus, in dem sich die Fräsenanordnung (9) in einer festen Position befindet, und einem Modus, in dem sich die Fräsenanordnung (9) in einer Schwebeposition befindet, wobei insbesondere die Position der Fräsenanordnung (9) den Bewegungen des Pistenraupenfahrzeugs (1) in der Schwebeposition folgt; und Position des Finishers (9b);
wobei das Pistenraupenfahrzeug (1) eine Funkkommunikationseinheit (18) umfasst, die konfiguriert ist, Daten von außen zu empfangen und vorzugsweise Daten nach außen zu senden;
wobei das Pistenraupenfahrzeug (1) eine Benutzerschnittstelle bzw. - oberfläche umfasst, die zumindest eine Antriebssteuerung bzw. -regelung zum Empfangen von Steuer- bzw. Regelanweisungen einer Bedienperson bezüglich des zumindest einen Parameters des Pistenraupenfahrzeugs (1) umfasst und mit der Steuer- bzw. Regelvorrichtung (17) gekoppelt ist, um die von der Bedienperson empfangenen Steuer- bzw. Regelanweisungen dorthin zu senden;
wobei das Pistenraupenfahrzeug (1) einen Positionsdetektor (13), insbesondere vom GNSS-Typ umfasst, der konfiguriert ist, die Position vorzugsweise innerhalb eines Skigebiets (200) zu detektieren;
**dadurch gekennzeichnet, dass** die Funkkommunikationseinheit (18) mit der Steuer- bzw. Regelvorrichtung (17) gekoppelt und konfiguriert ist, die von außen empfangenen Daten der Steuer- bzw. Regelvorrichtung bereitzustellen;
der Positionsdetektor (13) mit der Steuer- bzw. Regelvorrichtung (17) gekoppelt ist, um die detektierte Position an die Steuer- bzw. Regelvorrichtung zu senden;
wobei die Steuer- bzw. Regelvorrichtung (17) konfiguriert ist, in einem ersten Betriebsmodus den zumindest einen Parameter basierend auf den über die Benutzerschnittstelle empfangenen Anweisungen von der Bedienperson, den über die Funkkommunikationseinheit (18) empfangenen Daten und der über den Positionsdetektor (13) detektierten Position zu steuern bzw. zu regeln.

2. Pistenraupenfahrzeug nach Anspruch 1, wobei die Steuer- bzw. Regelvorrichtung (17) einen Speicher (19) umfasst, der konfiguriert ist zum Speichern von: vorzugsweise einer Karte (M) und/oder Daten bezüglich einer Karte (M); einem Bereich der Karte (M) und/oder Daten bezüglich zumindest eines Bereichs (50) der Karte (M); vorzugsweise zumindest einem Parameter des Pistenraupenfahrzeugs (1), Parametern, die mit dem zumindest einen Bereich (50) verknüpft sind; und vorzugsweise einem Wert oder Wertebereich des zumindest einen Parameters; wobei die Steuer- bzw. Regelvorrichtung (17) konfiguriert ist, basierend auf der von dem Positionsdetektor (13) detektierten Position zu bestimmen, ob sich das Pistenraupenfahrzeug (1) innerhalb des zumindest einen Bereichs (50) der Karte (M) befindet, und den zumindest einen Parameter in dem ersten Betriebsmodus zu steuern bzw. zu regeln, wenn sich das Pistenraupenfahrzeug innerhalb des zumindest einen Bereichs (50) der Karte (M) befindet.

3. Pistenraupenfahrzeug nach Anspruch 1 oder 2, wobei der zumindest eine Parameter die Geschwindigkeit des Pistenraupenfahrzeugs (1) und/oder die Motordrehzahl des Pistenraupenfahrzeugs (1) ist; die Steuer- bzw. Regelvorrichtung (17) konfiguriert ist, die Geschwindigkeit des Pistenraupenfahrzeugs (1) und/oder die Motordrehzahl des Pistenraupenfahrzeugs (1) basierend auf der über den Positionsdetektor empfangenen Position des Pistenraupenfahrzeugs (1) zu steuern bzw. regeln, insbesondere die Geschwindigkeit des Pistenraupenfahrzeugs und/oder die Motordrehzahl des Pistenraupenfahrzeugs auf einen Maximalwert zu begrenzen, und insbesondere konfiguriert ist, die Geschwindigkeit des Pistenraupenfahrzeugs (1) und/oder die Motordrehzahl des Pistenraupenfahrzeugs (1) einzustellen, vorzugsweise zu begrenzen, wenn sich das Pistenraupenfahrzeug (1) innerhalb des zumindest einen Bereichs (50) der Karte (M) befindet.

4. Pistenraupenfahrzeug nach einem der vorhergehenden Ansprüche, wobei der zumindest eine Parameter ein Einschalten einer Licht- bzw. Beleuchtungsanordnung des Pistenraupenfahrzeugs (1) ist; wobei die Steuer- bzw. Regelvorrichtung (17) konfiguriert ist, eine Licht- bzw. Beleuchtungsanordnung des Pistenraupenfahrzeugs (1) basierend auf der von dem Positionsdetektor (13) detektierten Position einzuschalten, insbesondere konfiguriert ist, eine Licht- bzw. Beleuchtungsanordnung des Pistenraupenfahrzeugs (1) einzuschalten, wenn sich das Pistenraupenfahrzeug (1) innerhalb des zumindest einen Bereichs (50) der Karte (M) befindet.

5. Pistenraupenfahrzeug nach einem der vorhergehenden Ansprüche, wobei das Pistenraupenfahrzeug (1) einen Anzeigebildschirm umfasst, der vorzugsweise in einer Kabine des Pistenraupenfahrzeugs untergebracht ist; wobei der zumindest eine Parameter eine an den Anzeigebildschirm des Pistenraupenfahrzeugs (1) zu sendende Nachricht ist; wobei die Steuer- bzw. Regelvorrichtung (17) konfiguriert ist, basierend auf der von dem Positionsdetektor (13) detektierten Position eine Nachricht an den Anzeigebildschirm zu senden, und insbesondere konfiguriert ist, eine Nachricht an den Anzeigebildschirm zu senden, wenn sich das Pistenraupenfahrzeug (1) innerhalb des zumindest einen Bereichs (50) der Karte (M) befindet.

6. Pistenraupenfahrzeug nach einem der vorhergehenden Ansprüche, wobei die Benutzerschnittstelle zumindest einen Bedienbefehl (14) umfasst, der von der Bedienperson bedient werden kann; wobei die Steuer- bzw. Regelvorrichtung (17) konfiguriert ist, den zumindest einen Parameter in einem zweiten Betriebsmodus zu steuern bzw. zu regeln, wenn der zumindest eine Bedienbefehl von der Bedienperson bedient wird; und wobei die Steuer- bzw. Regelvorrichtung (17) in dem zweiten Betriebsmodus konfiguriert ist, den zumindest einen Parameter basierend auf, vorzugsweise direkt, den Steuer- bzw. Regelanweisungen der Steuerung bzw. Regelung (10) und vorzugsweise ohne Berücksichtigung der über die Kommunikationseinheit (18) empfangenen Daten und der über den Positionsdetektor (13) detektierten Position zu steuern bzw. zu regeln.

7. Verwaltungssystem, umfassend ein Pistenraupenfahrzeug (1) nach einem der vorhergehenden Ansprüche; eine Verarbeitungseinheit (101) und eine weitere Kommunikationseinheit (102), die vorzugsweise in einer Vorrichtung entfernt von dem Pistenraupenfahrzeug untergebracht sind, und wobei die andere Kommunikationseinheit (102) in Kommunikation mit dem Pistenraupenfahrzeug (1), insbesondere mit der Kommunikationseinheit (18) des Pistenraupenfahrzeugs (1) gekoppelt ist; wobei die Verarbeitungseinheit (101) einen weiteren Speicher (103) umfasst, der die Karte (M) und/oder kartenbezogene Daten, den zumindest einen Bereich der Karte (M) und/oder Daten bezüglich des zumindest einen Bereichs (50) der Karte (M), vorzugsweise Daten, die den zumindest einen Bereich der Karte (M) umschreiben, vorzugsweise den zumindest einen Parameter, der mit dem zumindest einen Bereich (50) der Karte (M) verknüpft ist, und vorzugsweise den zumindest einen Wert oder Wertebereich, der mit dem zumindest einen Parameter verknüpft ist, speichert; wobei die Verarbeitungseinheit (101) konfiguriert ist: die Karte (M) und/oder Daten bezüglich des zumindest einen Bereichs (50) der Karte (M), den zumindest einen Bereich (50) der Karte (M) und/oder Daten bezüglich des zumindest einen Bereichs (50) der Karte (M), vorzugsweise die Daten, die den zumindest einen Bereich (50) der Karte (M) umschreiben, vorzugsweise den zumindest einen der Parameter, der mit dem zumindest einen Bereich (50) der Karte (M) verknüpft ist, und vorzugsweise den zumindest einen Wert oder Wertebereich, der mit dem zumindest einen der Parameter verknüpft ist, über die Kommunikationseinheit (102) an das Pistenraupenfahrzeug (1) zu senden.

8. Verwaltungssystem nach Anspruch 7, umfassend eine Mehrzahl von Pistenraupenfahrzeugen nach einem der Ansprüche 1 bis 6; wobei die Verarbeitungseinheit (101) konfiguriert ist, den zumindest einen Bereich der Karte (M) und/oder Daten, die mit dem zumindest einen Bereich (50) der Karte (M) verknüpft sind, vorzugsweise die den zumindest einen Bereich der Karte (M) umschreibenden Daten, vorzugsweise den zumindest einen Parameter, der mit dem zumindest einen Bereich (50) der Karte (M) verknüpft ist, und vorzugsweise den zumindest einen Wert oder Wertebereich, der mit dem zumindest einen Parameter verknüpft ist, über die andere Kommunikationseinheit (102) und die jeweilige Kommunikationseinheit (18) der Pistenraupenfahrzeuge (1) an ein, einige oder alle Pistenraupenfahrzeuge (1) der Mehrzahl von Pistenraupenfahrzeugen (1) zu senden; wobei vorzugsweise jedes Pistenraupenfahrzeug (1) der Mehrzahl von Pistenraupenfahrzeugen (1) konfiguriert ist, seine Position an die Verarbeitungseinheit (101) zu senden.

9. Verwaltungssystem nach Anspruch 7 oder 8, wobei die Verarbeitungseinheit (101), insbesondere der weitere Speicher (103), konfiguriert ist, eine Mehrzahl von Bereichen (50) der Karte (M) und/oder die jeweiligen Daten, die mit jedem der Mehrzahl von Bereichen verknüpft sind, und vorzugsweise den jeweiligen zumindest einen Parameter, der mit jedem Bereich der Mehrzahl von Bereichen verknüpft ist, zu speichern; wobei die Verarbeitungseinheit (101) konfiguriert ist, eine erste Gruppe von Bereichen (50) der Mehrzahl von Bereichen (50) der Karte (M) und/oder Daten, die mit der ersten Gruppe von Bereichen verknüpft sind, und vorzugsweise den jeweiligen zumindest einen verknüpften Parameter an eine erste Gruppe von Pistenraupenfahrzeugen (1) der Mehrzahl von Pistenraupenfahrzeugen 1 zu senden, und eine zweite Gruppe von Bereichen (50) der Mehrzahl von Bereichen der Karte (M) und/oder Daten bezüglich der zweiten Gruppe von Bereichen und vorzugsweise den jeweiligen zumindest einen verknüpften Parameter an eine zweite Gruppe von Pistenraupenfahrzeugen der Mehrzahl von Pistenraupenfahrzeugen zu senden.

10. Verwaltungssystem nach Anspruch 8 oder 9, wobei ein oder mehrere Bereiche (50) der Mehrzahl von Bereichen der Karte (M) basierend auf der Position eines oder mehrerer jeweiliger Pistenraupenfahrzeuge (1) der Mehrzahl von Pistenraupenfahrzeugen (1) definiert ist bzw. sind, wobei insbesondere jeder Bereich (50) der Karte (M) in dem Maße variiert, wie die Position des jeweiligen Pistenraupenfahrzeugs (1), mit dem er verknüpft ist, variiert, wobei vorzugsweise jeder Bereich (50) der Karte (M) als ein Umfang bzw. Kreis definiert ist, dessen Mittelpunkt der Position des jeweiligen Pistenraupenfahrzeugs (1) entspricht, dem er zugeordnet ist, und der einen vorgegebenen Radius aufweist; wobei vorzugsweise die Verarbeitungseinheit (101) konfiguriert ist, jeden Bereich (50), der mit der Position eines jeweiligen Pistenraupenfahrzeugs (1) verknüpft ist, an eines oder mehrere der Mehrzahl von Pistenraupenfahrzeugen zu senden, mit Ausnahme des jeweiligen Pistenraupenfahrzeugs, mit dem der Bereich verknüpft ist.

11. Verwaltungssystem nach einem der Ansprüche 7 bis 10, umfassend eine weitere Benutzerschnittstelle (110), die in Kommunikation mit der Verarbeitungseinheit (101) gekoppelt ist, wobei die andere Benutzerschnittstelle (110) konfiguriert ist, von einem Benutzer den zumindest einen Bereich (50) der Karte (M) und/oder Daten, die sich auf den Bereich beziehen, und vorzugsweise den zumindest einen Parameter, der mit dem zumindest einen Bereich (50) der Karte (M) verknüpft ist, und vorzugsweise den zumindest einen Wert oder Wertebereich, der mit dem zumindest einen Parameter des Pistenraupenfahrzeugs (1) verknüpft ist, zu empfangen und ihn an die Verarbeitungseinheit (101) zu senden, wobei insbesondere die andere Benutzerschnittstelle (110) einen Computer oder eine mobile Vorrichtung, beispielsweise ein Tablet, ein Mobiltelefon oder eine andere elektronische Vorrichtung mit einer Anzeigeeinheit umfasst, die konfiguriert ist, die Karte (M) anzuzeigen.

12. Skigebiet, umfassend das Verwaltungssystem (100) nach einem der Ansprüche 7 bis 11 und die zumindest eine Skipiste (201), wobei die Karte (M) die zumindest eine Skipiste (201) zeigt.

13. Skigebiet nach Anspruch 12, umfassend zumindest eine Schneeerzeugungs- bzw. Beschneiungsvorrichtung (202), die entlang der zumindest einen Skipiste (201) angeordnet ist, und wobei der zumindest eine Bereich (50) der Karte (M) die Position der zumindest einen Schneeerzeugungsvorrichtung (202) umfasst.

14. Verfahren zum Steuern bzw. Regeln eines Pistenraupenfahrzeugs; wobei das Pistenraupenfahrzeug (1) umfasst: einen Rahmen (2); zwei Ketten (6); eine Antriebseinheit (5), die mit den beiden Ketten (6) verbunden ist, um das Pistenraupenfahrzeug (1) zu bewegen; zumindest eine Arbeitsvorrichtung (7, 8, 9), ausgewählt aus der Gruppe von Arbeitsvorrichtungen beinhaltend: eine Winde (7), eine Fräsenanordnung (9) und eine Schaufel (10), wobei insbesondere die Arbeitsvorrichtung (7, 8, 9) mittels einer Verbindungsvorrichtung (20, 21) mit dem Rahmen (2) verbunden ist;
wobei das Verfahren die Schritte beinhaltet:
Überprüfen zumindest eines Parameters des Pistenraupenfahrzeugs (9), vorzugsweise bezüglich der Ketten (6) oder der zumindest einen Arbeitsvorrichtung (7, 8, 9), wobei insbesondere der zumindest eine Parameter aus einer Gruppe umfassend die folgenden Parameter ausgewählt ist:
Geschwindigkeit des Pistenraupenfahrzeugs (1); Drehzahl der Antriebseinheit (5); Einschalten einer Lichtanordnung des Pistenraupenfahrzeugs (1); Einstellungen der Fräse (9); Einstellungen der Winde (7); Einstellungen des Schildes (8); Positionen des Schildes (8) in Bezug auf die drei kartesischen Achsen; Einstellungen des Pistenraupenfahrzeugs (1); Einstellungen der Aufhängung bzw. Federung des Pistenraupenfahrzeugs (1); eine an einen Anzeigebildschirm des Pistenraupenfahrzeugs (1) zu sendende Nachricht; Geschwindigkeitsbegrenzungseinstellung; Einstellung von Alarmen; Warnungen bezüglich Fahrtrichtung, insbesondere Warnungen bezüglich eines Einfahrens in kritische Bereiche; Warnung vor Kollisionsgefahr mit statischen oder dynamischen Objekten; Abstandsanzeige zu anderen Pistenraupenfahrzeugen, vorzugsweise während Einsätzen von Flotten-Pistenraupenfahrzeugen; Drehrichtung einer Welle (9d) der Fräsenanordnung (9); Tiefe und/oder Winkel eines Schnitts bzw. Schneidens der Fräsenanordnung (9), vorzugsweise der Fräse (9a); Position der Fräsenanordnung (9a) entlang einer vertikalen Achse (71); Modus zum Einstellen der Position der Fräsanordnung (9) entlang einer vertikalen Achse (71), vorzugsweise aus: einem Modus, in dem sich die Fräsanordnung (9) in einer festen Position befindet, einem Modus, in dem die Fräsanordnung (9) einen gegebenen Druck auf die Schneedecke (72) ausübt, und zwar zusätzlich zu ihrem Eigengewicht oder abzüglich in Bezug auf Eigengewicht und dem ausgeübten Druckwert, und einem Modus, in dem sich die Fräsanordnung (9) in einer Schwebeposition befindet, wobei insbesondere die Position der Fräsanordnung der Schneedecke (72) folgt, wenn sie sich in der Schwebeposition befindet; Position der Flügel (9e) geöffnet oder geschlossen; Volumen einer Arbeitskammer der Fräse (9a); Position der Fräse (9a) in Bezug auf eine horizontale Ebene (73); Modus zum Einstellen der Position der Fräse (9a) in Bezug auf eine horizontale Ebene (73) vorzugsweise zwischen einem Modus, in dem sich die Fräsenanordnung (9) in einer festen Position befindet, und einem Modus, in dem sich die Fräsenanordnung (9) in einer Schwebeposition befindet, wobei insbesondere die Fräsenanordnung den Bewegungen des Pistenraupenfahrzeugs (1) in der Schwebeposition folgt; und Position des Finishers (9b);
Empfangen von Daten von außerhalb des Pistenraupenfahrzeugs und vorzugsweise Senden von Daten nach außen über eine Funkkommunikationseinheit (18);
Empfangen von Steuer- bzw. Regelanweisungen einer Bedienperson bezüglich des zumindest einen Parameters des Pistenraupenfahrzeugs (1);
Detektieren der Position des Pistenraupenfahrzeugs (1) vorzugsweise innerhalb eines Skigebiets;
Steuern bzw. Regeln, in einem ersten Betriebsmodus, des zumindest einen Parameters gemäß den Steuer- bzw. Regelanweisungen der Bedienperson, den von außen empfangenen Daten und der detektierten Position.

15. Verfahren nach Anspruch 14, umfassend die Schritte:
Speichern: vorzugsweise einer Karte (M) und/oder von Daten bezüglich der Karte (M); zumindest eines Kartenbereichs (M) und/oder Daten bezüglich des zumindest einen Bereichs (50) der Karte (M);
vorzugsweise Verknüpfen mit dem zumindest einen Bereich (50) der Karte (M) zumindest eines Parameters des Pistenraupenfahrzeugs (1) und vorzugsweise eines Werts oder Wertebereichs des Parameters;
vorzugsweise Speichern des zumindest einen Parameters des Pistenraupenfahrzeugs (1), der mit dem zumindest einen Kartenbereich (M) verknüpft ist, und vorzugsweise eines Werts oder Wertebereichs des Parameters;
Bestimmen, ob sich das Pistenraupenfahrzeug (1) innerhalb des zumindest einen Bereichs (50) der Karte (M) befindet, basierend auf der detektierten Position; und
Überprüfen des zumindest einen Parameters gemäß dem ersten Betriebsmodus, wenn sich die Pistenraupe innerhalb zumindest eines Bereichs (50) der Karte (M) befindet.

## Revendications

1. Dameuse comprenant :
un châssis (2) ;
deux chenilles (6) ;
une unité d'entraînement (5) reliée aux deux chenilles (6) afin de déplacer la dameuse (1) ;
au moins un dispositif (7, 8, 9) choisi parmi le groupe de dispositifs comprenant : un treuil (7), un ensemble de fraise (9) et une pelle (10), le dispositif (7, 8, 9) étant en particulier relié au châssis (2) à l'aide d'un dispositif de raccordement (20, 21) ;
au moins un dispositif de commande (17) configuré pour contrôler au moins un paramètre de la dameuse (1), de préférence lié aux chenilles (6) ou à l'au moins un dispositif (7, 8, 9), l'au moins un paramètre étant en particulier choisi parmi un groupe comprenant les paramètres suivants : la vitesse de la dameuse (1) ; le nombre de tours de l'unité d'entraînement (5) ; l'allumage d'un ensemble d'éclairage de la dameuse (1) ; les réglages de l'ensemble de fraise (9) ; les réglages du treuil (7) ; les réglages de la lame (8) ; les positions de la lame (8) par rapport aux trois axes cartésiens ; les réglages de la dameuse (1) ; le réglage de la suspension de la dameuse (1) ; un message à envoyer vers un écran d'affichage de la dameuse (1) ; le réglage de la limite de vitesse ; le réglage des alarmes ; les alertes relatives à la direction de conduite, en particulier les alertes relatives à l'entrée dans une zone critique ; l'alerte de risque de collision avec des objets statiques ou dynamiques ; l'indicateur de distance par rapport à d'autres dameuses de préférence pendant les opérations d'une flotte de dameuses ; le sens de rotation d'un arbre (9d) de l'ensemble de fraise (9) ; la profondeur et/ou l'angle de coupe de l'ensemble de fraise (9), de préférence de la fraise (9a) ; la position de l'ensemble de fraise (9) le long d'un axe vertical (71) ; le mode d'ajustement de la position de l'ensemble de fraise (9) le long d'un axe vertical (71), de préférence parmi : un mode dans lequel l'ensemble de fraise (9) se trouve dans une position fixe, un mode dans lequel l'ensemble de fraise (9) exerce une pression donnée sur le manteau neigeux (72) en plus de son propre poids ou en soustraction de son propre poids et de ladite valeur de pression exercée, et un mode dans lequel l'ensemble de fraise (9) se trouve dans une position de flottement, en particulier dans lequel la position de l'ensemble de fraise suit le manteau neigeux (72), lorsqu'il se trouve dans une position de flottement ; la position des ailes (9e), ouverte ou fermée ; le volume d'une chambre de la fraise (9a) ; la position de la fraise (9a) par rapport à un plan horizontal (73) ; le mode d'ajustement de la position de la fraise (9a) par rapport à un plan horizontal (73), de préférence entre un mode dans lequel l'ensemble de fraise (9) se trouve dans une position fixe et un mode dans lequel l'ensemble de fraise (9) se trouve dans une position de flottement, en particulier dans lequel la position de l'ensemble de fraise (9) suit les déplacements de la dameuse (1), lorsqu'elle se trouve dans une position de flottement ; et la position du finisseur (9b) ;
la dameuse (1) comprenant une unité de radiocommunication (18) configurée pour recevoir des données en provenance de l'extérieur et de préférence pour envoyer des données vers l'extérieur ;
la dameuse (1) comprenant une interface utilisateur comprenant au moins une commande d'entraînement destinée à recevoir des instructions de commande de la part d'un opérateur, relatives à l'au moins un paramètre de la dameuse (1), et couplée au dispositif de commande (17) de façon à envoyer à celui-ci les instructions de commande reçues de la part de l'opérateur ;
la dameuse (1) comprenant un détecteur de position (13), en particulier de type GNSS, configuré pour détecter la position, de préférence dans une station de ski (200) ;
**caractérisée en ce que** l'unité de radiocommunication (18) est couplée au dispositif de commande (17) et configurée pour fournir les données reçues en provenance de l'extérieur au dispositif de commande ;
le détecteur de position (13) est couplé au dispositif de commande (17) de façon à envoyer la position détectée au dispositif de commande ;
le dispositif de commande (17) étant configuré pour contrôler, dans un premier mode de fonctionnement, l'au moins un paramètre sur la base des instructions de commande de l'opérateur reçues via l'interface utilisateur, des données reçues via l'unité de radiocommunication (18), et de la position détectée via le détecteur de position (13).

2. Dameuse selon la revendication 1, dans laquelle le dispositif de commande (17) comprend une mémoire (19) configurée pour stocker : de préférence une carte (M) et/ou des données relatives à une carte (M) ; une zone de la carte (M) et/ou des données relatives à au moins une zone (50) de la carte (M) ; de préférence au moins un paramètre de la dameuse (1) parmi des paramètres associés à ladite au moins une zone (50) ; et de préférence une valeur ou une plage de valeurs dudit au moins un paramètre ; le dispositif de commande (17) étant configuré pour déterminer si la dameuse (1) se trouve ou non dans l'au moins une zone (50) de la carte (M) sur la base de la position détectée par le détecteur de position (13) et pour contrôler l'au moins un paramètre dans le premier mode de fonctionnement si la dameuse se trouve dans l'au moins une zone (50) de la carte (M).

3. Dameuse selon la revendication 1 ou 2, dans laquelle l'au moins un paramètre est la vitesse de la dameuse (1) et/ou le nombre de tours du moteur de la dameuse (1) ; le dispositif de commande (17) étant configuré pour contrôler la vitesse de la dameuse (1) et/ou le nombre de tours du moteur de la dameuse (1), en particulier pour limiter la vitesse de la dameuse et/ou le nombre de tours du moteur de la dameuse à une valeur maximale, sur la base de la position de la dameuse (1) reçue via le détecteur de position, et étant en particulier configuré pour ajuster, de préférence pour limiter, la vitesse de la dameuse (1) et/ou le nombre de tours du moteur de la dameuse (1) si la dameuse (1) se trouve dans l'au moins une zone (50) de la carte (M).

4. Dameuse selon l'une quelconque des revendications précédentes, dans laquelle l'au moins un paramètre est l'allumage d'un ensemble d'éclairage de la dameuse (1) ; le dispositif de commande (17) étant configuré pour allumer un ensemble d'éclairage de la dameuse (1) sur la base de la position détectée par le détecteur de position (13), et étant en particulier configuré pour allumer un ensemble d'éclairage de la dameuse (1) si la dameuse (1) se trouve dans l'au moins une zone (50) de la carte (M).

5. Dameuse selon l'une quelconque des revendications précédentes, dans laquelle la dameuse (1) comprend un écran d'affichage de préférence contenu dans une cabine de la dameuse ; dans laquelle l'au moins un paramètre est un message à envoyer vers l'écran d'affichage de la dameuse (1) ; le dispositif de commande (17) étant configuré pour envoyer un message à l'écran d'affichage sur la base de la position détectée par le détecteur de position (13), et étant en particulier configuré pour envoyer un message à l'écran d'affichage si la dameuse (1) se trouve dans l'au moins une zone (50) de la carte (M).

6. Dameuse selon l'une quelconque des revendications précédentes, dans laquelle l'interface utilisateur comprend au moins une commande de fonctionnement (14) qui peut être actionnée par l'opérateur ; dans laquelle le dispositif de commande (17) est configuré pour contrôler l'au moins un paramètre dans un deuxième mode de fonctionnement lorsque l'au moins une commande de fonctionnement est actionnée par l'opérateur ; et dans laquelle, dans le deuxième mode de fonctionnement, le dispositif de commande (17) est configuré pour contrôler l'au moins un paramètre sur la base, de préférence directement, des instructions de commande de la commande (10), et de préférence en ignorant les données reçues via l'unité de communication (18), et de la position détectée via le détecteur de position (13).

7. Système de gestion comprenant une dameuse (1) selon l'une quelconque des revendications précédentes ; une unité de traitement (101) et une autre unité de communication (102), de préférence contenues dans un dispositif distant de la dameuse, et dans lequel l'autre unité de communication (102) est couplée en communication à la dameuse (1), en particulier à l'unité de communication (18) de la dameuse (1) ; dans lequel l'unité de traitement (101) comprend une autre mémoire (103) qui stocke la carte (M) et/ou des données relatives à la carte, l'au moins une zone de la carte (M) et/ou des données relatives à l'au moins une zone (50) de la carte (M), de préférence des données qui entourent l'au moins une zone de la carte (M), de préférence l'au moins un paramètre associé à l'au moins une zone (50) de la carte (M) et de préférence l'au moins une valeur ou plage de valeurs associée à l'au moins un paramètre ; l'unité de traitement (101) étant configurée pour envoyer : la carte (M) et/ou des données relatives à l'au moins une zone (50) de la carte (M), l'au moins une zone (50) de la carte (M) et/ou des données relatives à l'au moins une zone (50) de la carte (M), de préférence les données entourant l'au moins une zone (50) de la carte (M), de préférence l'au moins un des paramètres associés à l'au moins une zone (50) de la carte (M) et de préférence l'au moins une valeur ou plage de valeurs associée à l'au moins un des paramètres, à la dameuse (1) via l'unité de communication (102).

8. Système de gestion selon la revendication 7, comprenant une pluralité de dameuses selon l'une quelconque des revendications 1 à 6 ; l'unité de traitement (101) étant configurée pour envoyer l'au moins une zone de la carte (M) et/ou les données associées à l'au moins une zone (50) de la carte (M), de préférence les données entourant l'au moins une zone de la carte (M), de préférence l'au moins un paramètre associé à l'au moins une zone (50) de la carte (M), et de préférence l'au moins une valeur ou plage de valeurs associée à l'au moins un paramètre à une, certaines ou la totalité des dameuses (1) de la pluralité de dameuses (1) via l'autre unité de communication (102) et l'unité de communication respective (18) des dameuses (1) ; chaque dameuse (1) de la pluralité de dameuses (1) étant de préférence configurée pour envoyer sa position à l'unité de traitement (101).

9. Système de gestion selon la revendication 7 ou 8, dans lequel l'unité de traitement (101), en particulier l'autre mémoire (103), est configurée pour stocker une pluralité de zones (50) de la carte (M) et/ou les données respectives associées à chacune de la pluralité de zones, et, de préférence, l'au moins un paramètre respectif associé à chaque zone de la pluralité de zones ; dans lequel l'unité de traitement (101) est configurée pour envoyer un premier groupe de zones (50) de la pluralité de zones (50) de la carte (M) et/ou des données associées audit premier groupe de zones, et de préférence l'au moins un paramètre associé respectif, à un premier groupe de dameuses (1) de la pluralité de dameuses (1), et un deuxième groupe de zones (50) de la pluralité de zones de la carte (M) et/ou des données relatives audit deuxième groupe de zones, et de préférence l'au moins un paramètre associé respectif, à un deuxième groupe de dameuses de la pluralité de dameuses.

10. Système de gestion selon la revendication 8 ou 9, dans lequel une ou plusieurs zone(s) (50) de la pluralité de zones de la carte (M) est/sont définie(s) sur la base de la position d'une ou plusieurs dameuse(s) respective(s) (1) de la pluralité de dameuses (1), chaque zone (50) de la carte (M) variant en particulier lorsque la position de la dameuse respective (1) à laquelle elle est associée varie, chacune desdites zones (50) de la carte (M) étant de préférence définie comme une circonférence ayant un centre qui correspond à la position de ladite dameuse respective (1) à laquelle elle est associée et ayant un rayon donné ; l'unité de traitement (101) étant de préférence configurée pour envoyer chaque zone (50) associée à la position d'une dameuse respective (1) à une ou plusieurs de la pluralité de dameuses, à l'exception de la dameuse respective à laquelle ladite zone est associée.

11. Système de gestion selon l'une quelconque des revendications 7 à 10, comprenant une autre interface utilisateur (110) couplée en communication à l'unité de traitement (101), l'autre interface utilisateur (110) étant configurée pour recevoir de la part d'un utilisateur l'au moins une zone (50) de la carte (M) et/ou des données relatives à ladite zone, et, de préférence, l'au moins un paramètre associé à l'au moins une zone (50) de la carte (M), et, de préférence, l'au moins une valeur ou plage de valeurs associée à l'au moins un paramètre de la dameuse (1) et pour l'envoyer à l'unité de traitement (101), l'autre interface utilisateur (110) comprenant en particulier un ordinateur, ou un dispositif mobile, comme une tablette ou un téléphone mobile ou tout autre dispositif électronique avec une unité d'affichage configurée pour afficher la carte (M).

12. Station de ski comprenant le système de gestion (100) selon l'une quelconque des revendications 7 à 11, et l'au moins une piste de ski (201), dans lequel la carte (M) indique l'au moins une piste de ski (201).

13. Station de ski selon la revendication 12, comprenant au moins un dispositif de production de neige (202) déplacé le long de l'au moins une piste de ski (201), et dans lequel l'au moins une zone (50) de la carte (M) comprend la position de l'au moins un dispositif de production de neige (202).

14. Procédé de commande d'une dameuse ; la dameuse (1) comprenant : un châssis (2) ; deux chenilles (6) ; une unité d'entraînement (5) reliée aux deux chenilles (6) de façon à déplacer la dameuse (1) ; au moins un dispositif (7, 8, 9) choisi parmi le groupe de dispositifs comprenant : un treuil (7), un ensemble de fraise (9) et une pelle (10), le dispositif (7, 8, 9) étant en particulier relié au châssis (2) à l'aide d'un dispositif de raccordement (20, 21) ; le procédé comprenant les étapes consistant à :
vérifier au moins un paramètre de la dameuse (9), de préférence lié aux chenilles (6) ou à l'au moins un dispositif (7, 8, 9), l'au moins un paramètre étant en particulier choisi parmi un groupe comprenant les paramètres suivants : la vitesse de la dameuse (1) ; le nombre de tours de l'unité d'entraînement (5) ; l'allumage d'un ensemble d'éclairage de la dameuse (1) ; les réglages de l'ensemble de fraise (9) ; les réglages du treuil (7) ; les réglages de la lame (8) ; les positions de la lame (8) par rapport aux trois axes cartésiens ; les réglages de la dameuse (1) ; le réglage de la suspension de la dameuse (1) ; un message à envoyer vers un écran d'affichage de la dameuse (1) ; le réglage de la limite de vitesse ; le réglage des alarmes ; les alertes relatives à la direction de conduite, en particulier les alertes relatives à l'entrée dans une zone critique ; l'alerte de risque de collision avec des objets statiques ou dynamiques ; l'indicateur de distance par rapport à d'autres dameuses de préférence pendant les opérations d'une flotte de dameuses ; le sens de rotation d'un arbre (9d) de l'ensemble de fraise (9) ; la profondeur et/ou l'angle de coupe de l'ensemble de fraise (9), de préférence de la fraise (9a) ; la position de l'ensemble de fraise (9a) le long d'un axe vertical (71) ; le mode d'ajustement de la position de l'ensemble de fraise (9) le long d'un axe vertical (71), de préférence parmi : un mode dans lequel l'ensemble de fraise (9) se trouve dans une position fixe, un mode dans lequel l'ensemble de fraise (9) exerce une pression donnée sur le manteau neigeux (72) en plus de son propre poids ou en soustraction de son propre poids et de ladite valeur de pression exercée, et un mode dans lequel l'ensemble de fraise (9) se trouve dans une position de flottement, en particulier dans lequel l'ensemble de fraise suit le manteau neigeux (72), lorsqu'il se trouve dans une position de flottement ; la position des ailes (9e), ouverte ou fermée ; le volume d'une chambre de la fraise (9a) ; la position de la fraise (9a) par rapport à un plan horizontal (73) ; le mode d'ajustement de la position de la fraise (9a) par rapport à un plan horizontal (73), de préférence entre un mode dans lequel l'ensemble de fraise (9) se trouve dans une position fixe et un mode dans lequel l'ensemble de fraise se trouve dans une position de flottement, en particulier dans lequel l'ensemble de fraise suit les déplacements de la dameuse (1), lorsqu'il se trouve dans une position de flottement ; et la position du finisseur (9b) ;
recevoir des données en provenance de l'extérieur de la dameuse et envoyer de préférence des données vers l'extérieur via une unité de radiocommunication (18) ;
recevoir des instructions de commande de la part d'un opérateur, relatives à l'au moins un paramètre de la dameuse (1) ;
détecter la position de la dameuse (1), de préférence dans une station de ski ;
contrôler, dans un premier mode de fonctionnement, l'au moins un paramètre selon les instructions de commande de l'opérateur, les données reçues depuis l'extérieur, et la position détectée.

15. Procédé selon la revendication 14, comprenant les étapes consistant à :
stocker : de préférence une carte (M) et/ou des données relatives à une carte (M) ; au moins une zone de la carte (M) et/ou des données relatives à au moins une zone (50) de la carte (M) ;
de préférence, associer à ladite au moins une zone de la carte (M) au moins un paramètre des paramètres de la dameuse (1), et de préférence une valeur ou une plage de valeurs dudit paramètre ;
stocker de préférence ledit au moins un paramètre de la dameuse (1) associé à ladite au moins une zone de la carte (M), et de préférence une valeur ou une plage de valeurs dudit paramètre ;
déterminer si la dameuse (1) se trouve ou non dans l'au moins une zone (50) de la carte (M) sur la base de la position détectée ; et
vérifier l'au moins un paramètre selon le premier mode de fonctionnement si la dameuse se trouve dans au moins une zone (50) de la carte (M).
